# EUROPEAN PATENT APPLICATION

(11) **EP 2 014 621 A1**
(43) Date of publication of application: **14.01.2009**
(21) Application number: 07739339.5
(22) Date of filing: 22.03.2007
(51) Int. Cl.: C03B 3/02, C03B 1/02, C03B 5/225

(54) **PROCESS FOR PRODUCING GLASS**

(30) Priority: 01.05.2006 JP 2006127941
(71) Applicant: Asahi Glass Company, Limited, Chiyoda-ku Tokyo 100-8405 (JP)
(72) Inventor: SAKAMOTO, Osamu, Tokyo 1008405 (JP); TSUJIMURA, Tomoyuki, Tokyo 1008405 (JP)
(74) Representative: Müller-Boré & Partner Patentanwälte
(86) International application number: PCT/JP2007/055896
(87) International publication number: WO 2007/129509

(57) **Abstract**

The present invention provides a process for producing glass, which can reduce energy consumption and which enables to obtain homogenous high quality glass products containing extremely few bubbles and containing no unmelted raw material.

A process for producing glass comprising a granulation step of granulating a glass raw material to obtain a granulated product containing a granulated product having a particle size of from 10 to 500 µm, and a vitrification step of making the granulated product obtained in the granulation step pass through a high temperature gas of from 2,000 to 20,000 K to obtain vitrified particles.

## Description

### TECHNICAL FIELD

The present invention relates to a process for producing glass.

### BACKGROUND ART

Energy consumed by glass industries occupies about 1% of the total energy consumption of all industries in Japan. And accordingly, reduction of energy consumption in glass industries is an extremely important object under the circumstance that global environment issue is attentioned in recent days.

Meanwhile, as typified by glass for displays or glass for electronics components, function and quality required to glass products become higher level year after year. Requirement of high level function generally requires a hardly fusible glass composition and requires strict criteria of defects such as bubbles or impurities. To satisfy these requirements, usually, glass products are produced in a process including a long time melting periods of from 1 to 6 days. This long time melting periods is required to eliminate insoluble defects, to remove bubbles or to homogenize composition.
Accordingly, in order to produce glass products satisfying required quality, a large amount of energy is required.

Thus, the two objects "reduction of energy consumption" and "high quality of glass products" are contradict to each other. It is extremely difficult to satisfy both of these contradict objects for glass-producing processes currently usually used in glass industries.

To cope with this problem, the following glass-producing processes are proposed.

For example, Patent Document 1 discloses a process of melting glass in a molten glass tank heated by a burner, that is a process of spraying a batch of preliminarily heated pellet having a particle size of from 3 to 8 mm made of a common component such as quartz, by a pressurized gas media into a molten glass in a tank, wherein the pellet is sprayed so as to form a pail-shaped floating layer on the molten glass so that the floating layer substantially spreads over the entire surface of the molten glass and substantially over the entire fire flame.

Patent Document 1 further discloses that such a method saves energy and improves glass quality.

Further, Patent Document 2 discloses, for the purpose of providing a process for producing a glass ingot, which enables to obtain a non-polluted glass ingot and which does not require high heat-resistant temperature of crucible, a process for producing a glass ingot comprising a step of melting a glass powder into a liquid molten glass, and casting the molten glass into a column-shaped glass ingot, the process being characterized in that the glass powder is melted into a molten glass by heat of thermal plasma formed by an electrodeless discharge, the molten glass is dripped into a cylindrical crucible, so that the temperature of the molten glass in the crucible is maintained and a temperature slope is formed so that the temperature decreases as the position in the molten glass is lower, and solidified glass moving out from the bottom of the crucible is continuously pulled out downwardly.

Further, Patent Document 2 discloses that glass ingot can be continuously formed with low cost by such a production process.

Further, Patent Document 3 discloses a process for producing a composite quartz glass containing aluminum and/or yttrium, wherein a material containing aluminum and/or yttrium to silicate material powder to obtain a mixed powder, and the mixed powder is made to pass through a plasma arch-coupling region in which at least two electrodes having opposite polarity and at least two plasma arcs are coupled, or through the vicinity of such a region, to melt the mixed powder.

Further, Patent Document 3 discloses that such a production process achieves high productivity and enables to produce a quartz glass containing little impurities and excellent in e.g. shock resistance even under high density plasma.
Patent Document 1: JP-A-53-59713
Patent Document 2: JP-A-2000-169161
Patent Document 3: JP-A-2002-356337

### DISCLOSURE OF THE INVENTION

### PROBLEMS TO BE SOLVED BY THE INVENTION

However, by such conventional processes, it is not possible to obtain a high quality glass product, particularly, a glass product containing extremely few bubbles and that is homogenous glass containing no unmelted raw material.

It is an object of the present invention to provide a glass production process reducing energy consumption. Further, the present invention provides a process for producing glass which enables to obtain a high quality glass containing extremely few bubbles. Further, the present invention provides a process for producing glass which enables to obtain a homogenous high quality glass product containing no unmelted raw material.

### MEANS OF SOLVING THE PROBLEMS

The present inventors have conducted extensive studies for providing a new process for producing glass which satisfies both of the contradict objects that are "reduction of energy consumption" and "high quality of glass products", and discovered the following production process to complete the present invention.

Namely, the present invention provides a process for producing glass comprising a granulation step of granulating a glass raw material to obtain a granulated product containing a granulated product having a particle size of from 10 to 500 µm, and a vitrification step of making the granulated product obtained in the granulation step pass through a high temperature gas of from 2,000 to 20,000 K to obtain vitrified particles.

In the present invention, it is preferred that the porosity of the granulated product obtained in the granulation step is from 30 to 80%. In the present invention, it is preferred that the process further comprises a holding step of holding the vitrified particles to obtain a molten glass.

In the present invention, it is preferred that the granulation step is a step of granulating the glass raw material by a spray dry method to obtain the granulated product.

In the present invention, it is preferred that the vitrification step is a step of making the granulated product pass through the high temperature gas for from 1 to 10,000 msec.

In the present invention, it is preferred that the glass raw material is a powder having an average particle size of from 0.1 to 300 µm.

In the present invention, it is preferred that the glass raw material contains a refining agent and the process further comprises a refining step of refining the vitrified particles or the molten glass.

### EFFECTS OF THE INVENTION

According to the present invention, it is possible to provide a process for producing glass, which enables to reduce energy consumption and to obtain high quality glass products containing extremely few bubbles and is homogenous containing no unmelted raw material.

### BRIEF DESCRIPTION OF THE DRAWINGS

Fig. 1: A schematic view showing a preferred embodiment of the production process of the present invention.
Fig. 2: A view showing analysis result in an embodiment of the production process of the present invention.

### EXPLANATION OF NUMERALS

- 1:: Granulated product
- 3:: Oxygen combustion burner
- 5:: Plasma torch
- 6:: High temperature gas
- 7:: Glass holding tank
- 9:: Vitrified particles
- 10:: Molten glass

### BEST MODE FOR CARRYING OUT THE INVENTION

Now, the production process of the present invention is described.

The production process of the present invention comprises a granulation step and a vitrification step.

First, the granulation step in the production process of the present invention is described.

The granulation step in the production process of the present invention is a step of granulating a glass raw material to obtain a granulated product having a particle size of from 10 to 500 µm.

Here, the glass raw material is not particularly limited so long as it is a glass raw material to be used for production of regular glass. Further, target glass composition or component (composition) are not particularly limited. The glass raw material may, for example, be a silica sand, sodium carbonate, calcium carbonate or sodium sulfate when the target glass is a soda lime glass.

Further, the glass raw material may be entirely a powder form, but it may be partially a liquid form.

The glass raw material may further contain a cullet or a refining agent to be employed for melting regular glass or an oxidation reduction auxiliary agent to be used for redox adjustment.

Further, the particle size of the powder-form glass raw material (hereinafter it is also referred to as "powder raw material") in the glass raw material is not particularly limited so long as it can produce a granulated product having a particle size to be described later. The average particle size is preferably from 0.1 to 300 µm, more preferably from 0.2 to 300 µm.

Here, the average particle size of the powder raw material means a value measured by a laser diffraction scattering method (measurement apparatus: HORIBA LA950 WET).

The granulation step in the production process of the present invention is a step of granulating such a glass raw material to obtain a granulated product having a particle size of from 10 to 500 µm. In this case, it is preferred to granulate the glass raw material after it is blended. Here, the particle size of the granulated product is measured by a screening method by using a standard mesh.

When the granulated product has such a particle size, the granulated product hardly spatters in a high temperature gas in the vitrification step to be described later, whereby vitrified particles can be formed more easily. Accordingly, from such a vitrified particles, a homogenous high quality glass products having extremely few bubbles and no unmelted raw material, can be produced.

The present inventors consider that the reason why bubbles become thus extremely few is because when the granulated product has such a particle size, and when the granulated product passes through a high temperature gas in a vitrification step to be described later, the granulated product tend to discharge a gas (e.g. a carbon dioxide gas).

Here, it is not necessary that all of the granulated product obtained in the granulation step in the production process of the present invention is a granulated product having the above particle size. Provided that all of the granulated product obtained in the granulation step in the production process of the present invention is designated as "entire granulated product" and a granulated product having a particle size of the above-mentioned range in the entire granulated product is designated as "objective granulated product", it is sufficient that the objective granulated product constitute a part of the entire granulated product (hereinafter the terms "entire granulated product" and "objective granulated product" have these meanings.)

Here, the presence probability (population percentage) of the objective granulated product in the entire granulated product is preferably at least 30%, more preferably at least 50%. When this value is high and the particle size of granulated product (entire granulated product) produced by the granulation step in the production process of the present invention is uniform (the width of particle size distribution is narrow), it is possible to produce homogenous high quality glass products having fewer bubbles and containing less unmelted raw material.

Hereinafter, a term "granulated product" alone means "entire granulated product".

Further, the above-mentioned entire granulated product obtained by the granulation step in the production process of the present invention, is preferably a granulated product having a porosity of from 30 to 80%.

When the entire granulated product has such a porosity, it becomes possible to produce further homogenous and high quality glass products having further fewer bubbles and containing no unmelted raw material.

Here, the porosity is measured by a mercury injection type porosimeter which measures an injection amount of mercury while a sample is immersed in the mercury and pressurized from the surrounding.

The method of granulating the glass raw material is not particularly limited. It is sufficient that it is a granulation method capable of producing the above-mentioned objective granulated product. Such a granulation method may, for example, be a conventionally known granulation method. In such a method, by adjusting the granulation conditions, the above-mentioned objective granulated product can be obtained.

Such a conventionally known granulation method may, for example, be a spray dry method, a rolling method (pelletizing method, a method employing a rotating pan, etc.), a compression method (a roller press, a briquetting roll, tabletting, etc.), a fluidized bed granulation method (fluidized bed, modified fluidized bed, spray mist bed, etc.), a stirring granulation method (pug mill, Henschel, Eirich, etc.), a pulverization granulation method (rotating blade (vertical), rotating blade (horizontal), rotating bar, etc.), or an extrusion granulation (forming) method (screw, rotating porous dice, rotating blade, etc.).

Among these granulation methods, a spray dry method is preferred. This is because it is possible to increase the presence probability (population percentage) of the objective granulated product in the entire granulated product. Usually, it is possible to make the probability at least 50%.

Further, when the granulated product is produced by a spray dry method, it becomes possible to produce glass products having fewer bubbles as compared with a case of granulating by other granulation methods. The present inventors consider that this is because a granulated product granulated by a spray dry method has a structure that tends to discharge a gas (e.g. carbon dioxide gas or moisture) from the granulated product when it passes through a high temperature gas in a vitrification step to be described later. Further, when a granulated product is granulated by a spray dry method, it is possible to produce homogenous high quality glass products containing less unmelted raw materials as compared with a case of granulating by other granulation methods. The present inventors consider that this is because in a granulated product granulated by a spray dry method, the above powder raw material is present more uniformly without being present unevenly as compared with a granulated product granulated by other granulation methods.

Here, a spray dry method is a method of forming fine mist of a slurry in which the above glass raw material is dispersed in water, by e.g. spray, and blowing such a mist into a hot wind to be instantaneously dried to obtain the above granulated product made of the glass raw material. Further, a compression method employing a roller press is also preferred in that granulated product contains less bubbles and is excellent in homogeneity.

Further, the content of the glass raw material in the slurry is not particularly limited, but it is preferably from 20 to 50 mass%. Further, the temperature of the hot wind is not particularly limited, but it is preferably from 130 to 500°C. Under such content or temperature conditions, the presence probability (population percentage) of the objective granulated product in the entire granulated product can be increased.

Then, the vitrification step in the production process of the present invention is described.

The vitrification step in the production process of the present invention is a step of making the entire granulated product obtained in the granulation step pass through a high temperature gas of from 2,000 to 20,000 K to obtain vitrified particles.

Here, the vitrified particles mean liquid droplets that are particles of the entire granulated product at least a part of which is melted by passing through the high temperature gas.

Further, the high temperature gas of from 2,000 to 20,000 K is usually an air heated to such a temperature by a common method, but it may be another gas.

The method for forming the gas of such a temperature may, for example, be a method of using an oxygen burner, a method of using plasma (high frequency (RF) plasma etc.), a method of combining both of them or a method of employing an electric heating. For example, by producing combustion by using an oxygen burner, it is possible to obtain a high temperature air (high temperature gas) in the above temperature range in a flame. Further, for example, by producing a plasma in the air, it is possible to make the air in the plasma generation region to be the above high temperature gas.

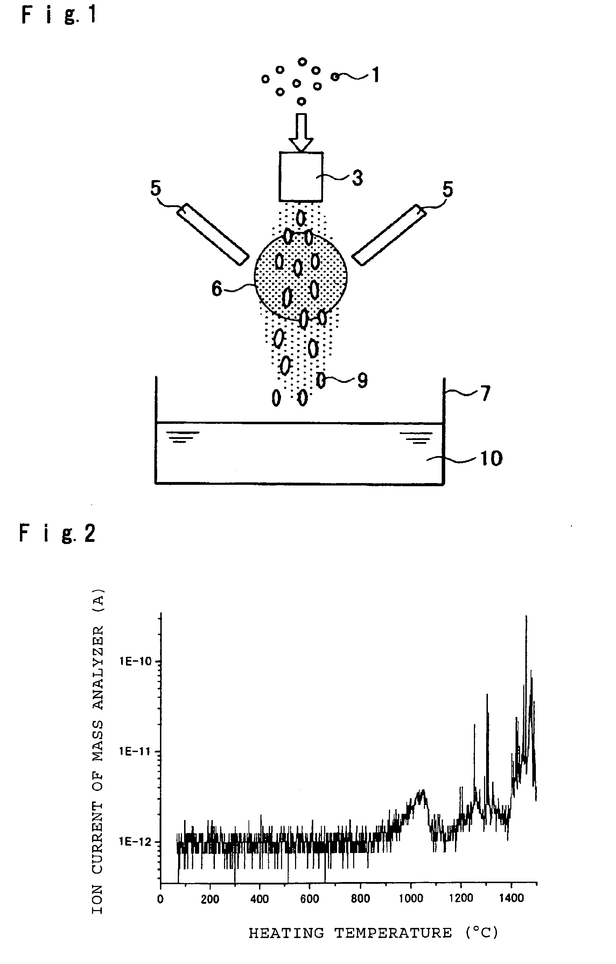

Such a vitrification step may be explained with reference to e.g. Fig. 1.

Fig. 1 is a view showing a preferred embodiment of the present invention, which shows a step of dropping an entire granulated product 1 obtained in the granulation step vertically through a high temperature gas 6 heated to from 2,000 to 20,000 K by an oxygen combustion burner 3 and/or a plasma torch 5, to obtain vitrified particles 9.

The entire granulated product 1 passing or passed through such a high temperature gas discharges a decomposition gas (e.g. carbon dioxide gas or moisture) in the granulated product 1, to be vitrified particles 9. Accordingly, from such vitrified particles 9, it is possible to obtain homogenous high quality glass products containing extremely few bubbles and containing no unmelted raw material.

Here, as to be described later, the production process of the present invention preferably comprises a holding step, and Fig. 1 shows a preferred embodiment of the production process of the present invention comprising the holding step. Fig. 1 shows that the vitrified particles obtained by the vitrification step are held in a glass holding tank 7 (the particles form molten glass 10).

The temperature of the high temperature gas is preferably from 2,000 to 20,000 K.

When the temperature is in this range, the vitrified particles 9 are formed with less energy consumption, and accordingly, it becomes possible to obtain homogenous high quality glass products containing fewer bubbles and less unmelted raw material.

Further, the length of time for the entire granulated product 11 to pass through the high temperature gas having such a temperature, namely, the staying time of the entire granulated product 1 in the high temperature gas is preferably from 1 to 10,000 msec, more preferably from 2 to 1,000 msec, further preferably from 5 to 200 msec.

In general, under the thermal conduction speed of glass raw material, when the glass raw material passes through the above-mentioned temperature atmosphere in the above-mentioned time, inside of the granulated product reaches a temperature required for vitrification reaction, whereby discharge of decomposed gas can be promoted. The present inventors consider that as a result, it is possible to obtain homogenous high quality glass products containing fewer bubbles and less unmelted raw material, with less energy consumption.

Further, when vitrified particles are obtained by making the entire granulated product containing a refining agent pass through the high temperature gas, the refining agent remains in the vitrified particles 9 obtained.

Accordingly, when the production process of the present invention further comprises a refining step as to be described later, it is possible to obtain more effective refining effect by the refining agent.

The production process of the present invention comprises such granulation step and vitrification step.

Further, the production process of the present invention preferably further comprises a holding step of storing the above vitrified particles 9 to obtain a molten glass 10.

Here, the molten glass 10 means a liquid glass obtained by storing the vitrified particles in e.g. a holding tank.

The holding step is, as shown in Fig. 1 being a preferred embodiment, a step of storing the vitrified particles 9 obtained by passing the entire granulated product through the high temperature gas 6 in the vitrification step, in e.g. a holding tank, to obtain a molten glass 10.

By such a holding step, it is possible to obtain a molten glass 10 in which further reduction of bubbles and homogenization of glass is achieved.

In the case of the preferred embodiment shown in Fig. 1, since inside of the glass holding tank 7 is heated to a temperature higher than that of a common glass melting tank by radiation from the high temperature gas in the vitrification step, even if unmelted product or bubbles are remained in the molten glass, it is possible to promote homogenization of the molten glass and removal of bubbles.

However, in a case where the radiation heating from the high temperature gas is insufficient from the limitation of equipment structure, it is possible to carry out an auxiliary heating of the molten glass 10 by known heating methods.

Here, the temperature of the molten glass 10 is not particularly limited, and the preferred temperature changes also depending on the type (e.g. composition) of the molten glass. For example, when the composition of the molten glass 10 is the same as the soda lime glass, the temperature of the molten glass 10 is preferably maintained to be about from 1,300 to 1,700°C.

The production process of the present invention comprises the granulation step and the vitrification step, and preferably further comprises such a holding step. Further, in the production process of the present invention, it is preferred that the glass raw material contains a refining agent and the production process preferably comprises the refining step of refining the vitrified particles 9 and/or the molten glass 10 after the vitrification step and/or after the holding step.

Bubbles contained in the vitrified particles or the molten glass 10 obtained in the production process of the present invention is extremely few, but when the production process of the present invention further comprises the refining step, it is possible to further reduce bubbles, such being preferred.

Here, the refining agent is not particularly limited and it may be one usually employed. For example, it may, for example, be antimony oxide, tin oxide, a sulfate or a halide. It is preferred to mix these in the glass raw material and make them contained in the entire granulated product to be employed.

Further, the refining step suitably included in the production process of the present invention is not particularly limited, and it may be a refining step included in a normal glass production process. For example, the step may be a step of using a refining tank for spreading a molten glass into a thin layer to facilitate degassing, or a vacuum refining step.

A preferred production process of the present invention comprising such a refining step, comprises making the entire granulated product obtained in the granulation step pass through the high temperature gas to produce vitrified particles 9 (vitrification step), storing the vitrified particles 9 in a glass holding tank 7 to produce molten glass 10 (holding step), and thereafter, refining the molten glass 10 in a refining step.

The refining step in such a production process of the present invention achieves refining in a shorter time as compared with conventional process since the vitrified particles 9 and the molten glass 10 contains fewer bubbles.

Thus, the production process of the present invention comprises the granulation step, the vitrification step and preferably the holding step and/or the refining step. Then, the production process may comprises a normal forming step such as a float process in a case of plate glass after the vitrification step, the holding step or the refining step.

### EXAMPLES

Now, Examples of the present invention will be described, but the present invention is not limited to the Examples.

### EXAMPLE 1

A glass raw material was prepared, which comprises a silica sand, a calcium carbonate, a sodium carbonate aqueous solution and a sodium sulfate aqueous solution, so that the composition of vitrified particles becomes 73.5 mass parts of SiO₂, 16 mass part of Na, 10 mass parts of CaO and 0.5 mass part of SO₃. In this glass raw material, the silica sand and the calcium carbonate were powder materials and their average particle sizes were 1 µm. These particle sizes were measured by the above-mentioned laser diffraction scattering method.

Then, such a glass raw material was granulated by using a spray dry apparatus (model: OC-16) manufactured by Ohkawara Kakohki Co., Ltd. The entire granulated product had a porosity of from 30 to 80%. The particle size of the objective granulated product was about 60 µm, and the presence probability (population percentage) of the objective granulated product in the entire granulated product was at least 50%.

Then, the entire granulated product obtained was put in an oxygen combustion burner flame by the method shown in Fig. 1, to vitrify the granulated product to obtain vitrified particles. The temperature of a high temperature gas in the oxygen combustion burner flame is assumed to be within a range of about from 2,100 to 3,000 K. Further, the length of time for the entire granulated product to pass through the high temperature gas is assumed to be about 10 to 50 msec.

Then, a part of vitrified particles obtained in this step was sampled, and after they were cooled, the glass sample (it is referred to as "glass sample 1") obtained was visually observed, and as a result, no bubble of at least 0.3 mm size was observed in glass sample 1.

Then, the vitrified particles obtained was held in a holding tank to obtain a molten glass. Here, the temperature of the molten glass in the holding tank was about 1,450°C. Then, the molten glass was taken out from the holding tank to obtain a glass sample (it is referred to as "glass sample 2"), and the sample was subjected to double side polishing to have a thickness of about 5 mm, and the number of bubbles was measured by microscopic observation. As a result, no bubble of at least 0.3 mm size was observed in the glass sample 2, and 0.9 piece/g of bubble of less than 0.3 mm size was observed. Further, no unmelted silica sand was present in the glass sample 2 obtained.

### EXAMPLE 2

An entire granulated product was obtained using a material and a method equivalent to those of Example 1.

Then, the entire granulated product obtained was put in a plasma generation region in the air by the method shown in Fig. 1, to vitrify the entire granulated product to obtain vitrified particles. Here, argon was used as a plasma-generation gas. The temperature of the air (high temperature gas) in the plasma-generation region is assumed to be about 5,300 K. Further, the time required for the entire granulated product to pass through the high temperature gas is assumed to be from a few msec to 20 msec.

Then, a part of the vitrified particles was sampled, and after it was cooled, a glass sample (it is referred to as "glass sample 3") obtained was visually observed, and the number of bubbles was measured. As a result, no bubble of at least 0.3 mm size was observed in the glass sample 3.

Further, the same test was carried out with different supply rate of the granulated glass raw material supplied into the plasma generation apparatus, and/or different gas supply rate for plasma generation, to obtain samples (they are referred to as "glass samples 4 to 7"). The numbers of bubbles were measured in the same manner.

Further, the glass samples 3 to 7 were each put in a crucible, and heated again at 1,500°C for 1 hour to be melted, and molten glass was taken out and gradually cooled to obtain each glass sample. Then, it was subjected to double side polishing to have a thickness of about 5 mm, and the number of bubbles of at least 0.3 mm size was measured by microscopic observation.

Further, as a Comparative Example, 80 g of the granulated glass raw material was put in a crucible and heated at 1,500°C for 1 hour to be melted, and the number of bubbles of at least 0.3 mm size was counted in the same manner as the above sample glasses.

Table 1 also shows these measurement results.

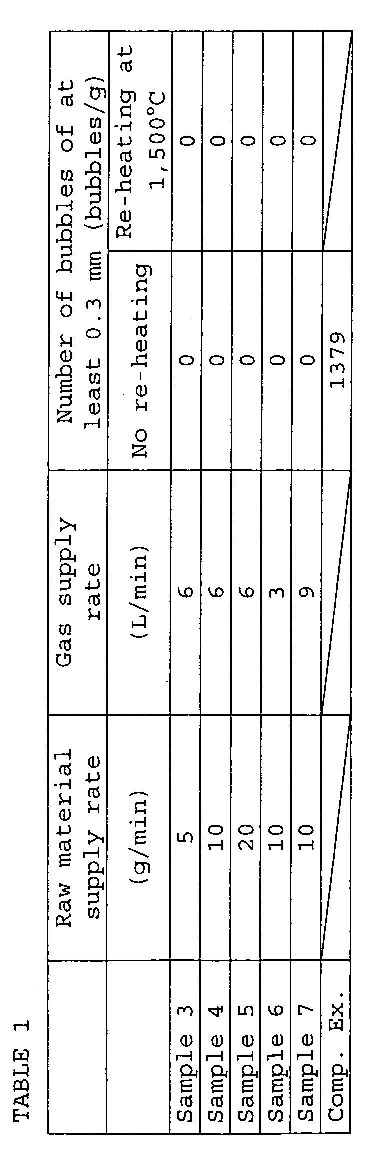

Table 1 shows that in the glass sample (Comparative Example) prepared by melting the granulated glass raw material, 1,379 bubbles of at least 0.3 mm were observed in 1 g of the glass sample, but in a glass sample passed through a plasma-generation region and a glass sample prepared by re-heating the glass sample, no such bubble was observed.

Then, gas generated from the glass sample 3 during heating was analyzed by using a mass spectroscopy. Fig. 2 shows the measurement result of SO₂ component. From this Figure, generation of SO₂ component from the glass sample 3 obtained was confirmed. Further, gases generated from glass samples 4 to 7 when they were heated were measured by using a mass spectroscopy in the same manner, and as a result, generation of SO₂ component from all glass samples in a high temperature region of at least 1,300°C was confirmed. It was confirmed from these results that sulfur component was remained in vitrified particles that were vitrified by passing through a high temperature gas of more than 5,000 K. Accordingly, when a refining step such as one using a refining tank is provided after the vitrification step of the present invention, it becomes possible to further reduce bubbles by emission of residual sulfur component in the vitrified particles.

As described above, according to the present invention, it is possible to reduce energy consumption since high quality glass products can be obtained in a short time. Further, it becomes possible to produce high quality glass products containing extremely few bubbles. Further, it becomes possible to obtain homogenous high quality glass products containing no unmelted raw material. Further, when the production process of the present invention includes a refining tank after the vitrification step, it is possible to be refined by the emission of sulfur component remaining in the vitrified particles in this refining tank, and accordingly, significant refining effect is exhibited in the refining step.

### INDUSTRIAL APPLICABILITY

The present invention is suitable for production of homogenous high quality glass products containing extremely few bubbles and containing no unmelted raw material, while reducing energy consumption.

The entire disclosure of Japanese Patent Application No. 2006-127941 filed on May 1, 2006 including specification, claims, drawings and summary is incorporated herein by reference in its entirety.

## Claims

1. A process for producing glass comprising a granulation step of granulating a glass raw material to obtain a granulated product containing a granulated product having a particle size of from 10 to 500 µm, and a vitrification step of making the granulated product obtained in the granulation step pass through a high temperature gas of from 2,000 to 20,000 K to obtain vitrified particles.

2. The process for producing glass according to Claim 1, wherein the porosity of the granulated product obtained in the granulation step is from 30 to 80%.

3. The process for producing glass according to Claim 1 or 2, which further comprises a holding step of holding the vitrified particles to obtain a molten glass.

4. The process for producing glass according to any one of Claims 1 to 3, wherein the granulation step is a step of granulating the glass raw material by a spray dry method to obtain the granulated product.

5. The process for producing glass according to any one of Claims 1 to 4, wherein the vitrification step is a step of making the granulated product pass through the high temperature gas for from 1 to 10,000 msec.

6. The process for producing glass according to any one of Claims 1 to 5, wherein the glass raw material is a powder having an average particle size of from 0.1 to 300 µm.

7. The process for producing glass according to any one of Claims 1 to 6, wherein the glass raw material contains a refining agent and the process further comprises a refining step of refining the vitrified particles or the molten glass.
